# EUROPEAN PATENT SPECIFICATION

(11) **EP 1 593 836 B1**
(45) Date of publication and mention of the grant of the patent: **27.06.2007**
(21) Application number: 04709718.3
(22) Date of filing: 10.02.2004
(51) Int. Cl.: F02M 37/00, F02M 69/04, B62J 37/00

(54) **FUEL-FEEDING DEVICE IN TWO-WHEELED MOTOR VEHICLE**
KRAFTSTOFFZUFUHRVORRICHTUNG IN ZWEIRÄDRIGEM KRAFTFAHRZEUG
DISPOSITIF D'ALIMENTATION EN CARBURANT DANS UN VEHICULE MOTORISE A DEUX ROUES

(30) Priority: 12.02.2003 JP 2003033883
(43) Date of publication of application: 09.11.2005
(73) Proprietor: HONDA MOTOR CO., Ltd., Tokyo 107-8556 (JP)
(72) Inventor: SAITO, Norio, K. K. Honda Gijutsu Kenkuysho, Wako-shi, Saitama 351-0193 (JP); YOKOYAMA, Mitsuru, K. K. Honda Gijutsu Kenkuysho, Wako-shi, Saitama 351-0193 (JP)
(74) Representative: Prechtel, Jörg
(86) International application number: PCT/JP2004/001394
(87) International publication number: WO 2004/072468

(56) References cited:
- EP-A- 0 806 557
- EP-A- 1 122 159
- JP-A- 10 176 545
- JP-A- 2001 213 373
- JP-A- 2001 263 208
- JP-A- 2001 271 723
- JP-A- 2001 317 436
- JP-U- 4 104 155
- PATENT ABSTRACTS OF JAPAN vol. 2000, no. 26, 1 July 2002 (2002-07-01) & JP 2001 263208 A (WALBRO JAPAN INC), 26 September 2001 (2001-09-26)

## Description

### FIELD OF THE INVENTION

The present invention relates to a motorcycle, in which a downstream end of an air intake pipe attached with a fuel injection valve is connected to an upper sidewall of a cylinder head provided in an engine mounted on a body frame while horizontalizing a cylinder axis or tilting a front thereof upward, a fuel supply-side line and a pressure regulator are connected to a fuel supply pipe connected to the fuel injection valve, and a fuel return-side line is connected to the pressure regulator. Particularly, the present invention relates to an improvement of a fuel supply device.

### BACKGROUND ART

Such a motorcycle is already known by, for example, Japanese Patent Application Laid-open No. 2000-249028 and the like, which discloses a configuration in which a pressure regulator and a fuel supply-side line are connected to both of front and rear ends of a fuel supply pipe extended to a fore-and-af t direction below a body frame and having a fuel injection valve connected to an intermediate portion thereof , and a configuration in which the pressure regulator and the fuel supply-side line are connected to both of right and left ends of a fuel supply pipe extended right and left below the vehicle frame and has the fuel injection vale connected to an intermediate portion thereof.

Incidentally, in the conventional configuration as described above in which the pressure regulator and the fuel supply-side line are connected to both of the front and rear ends of the fuel supply pipe extended to the front-and-aft direction, the fuel supply pipe is arranged below the body frame. Accordingly, it is difficult to secure a space for arranging the pressure regulator while avoiding interference with the body frame. Meanwhile, if the pressure regulator and the fuel supply-side line are connected to both of the right and left ends of the fuel supply pipe extended right and left, there is a possibility that a body width might be increased by an arrangement of the pressure regulator though it is easy to secure the space for arranging the pressure regulator.

### DISCLOSURE OF THE INVENTION

The present invention has been created in consideration of such circumstances. It is an object of the present invention to provide a fuel supply device in a motorcycle, which avoids interference with a body frame while avoiding an increase of a body width, thus making it possible to secure a space for arranging a pressure regulator easily.

In order to achieve the above-mentioned object, according to a first aspect of the present invention, in a motorcycle in which an engine in which a cylinder axis is horizontalized or a front thereof is tilted upward is arranged below a body frame and mounted on the body frame, a downstream end of an air intake pipe arranged below the body frame and attached with a fuel injection valve is connected to an upper sidewall of a cylinder head provided in the engine, a fuel supply-side line for guiding fuel and a pressure regulator arranged close to the fuel injection valve are connected to a fuel supply pipe connected to the fuel injection valve, and a fuel return-side line is connected to the pressure regulator, the fuel supply pipe is characterized in that a front end portion of the fuel supply pipe arranged to be extended to a fore-and-aft direction below the body frame is connected to the fuel injection valve, and a return-side connection pipe portion for connecting the fuel return-side line thereto in a same direction as an extended direction of the fuel supply-side line connected to a rear end portion of the fuel supply pipe is provided in the pressure regulator arranged below the fuel supply pipe and connected to an intermediate portion of the fuel supply pipe.

With such configuration, the pressure regulator is arranged below the fuel supply pipe below the body frame. Accordingly, the pressure regulator does not interfere with the body frame, and the space for arranging the pressure regulator can be secured easily while avoiding interference with the body frame. Moreover, the pressure regulator is connected to the intermediate portion of the fuel supply pipe extended to the fore-and-aft direction. Accordingly, the pressure regulator does not protrude to any side in a width direction of the body frame. In addition, the fuel supply-side line connected to the fuel supply pipe and the fuel return-side line connected to the pressure regulator can be cabled collectively, and an improvement of installation easiness can be achieved. Furthermore, it is possible to install the fuel injection valve and the pressure regulator to the fuel supply pipe and to make these into a unit, and a reduction of an installation man-hour in an assembly line of the motorcycle can be achieved.

Moreover, according to a second aspect of the present invention, in addition to the configuration of the first aspect, the fuel supply pipe, the fuel injection valve and the pressure regulator are covered with a sound insulation cover made of an elastic material and brought into intimate contact with the air intake pipe in a periphery of the fuel injection valve. With such arrangement, almost all of transmission regions of a sound generated in the fuel injection valve are covered with the sound insulation cover, and an excellent sound insulation effect can be obtained.

Furthermore, according to a third aspect of the present invention, in addition to the configuration of the second aspect, the sound insulation cover is formed by setting bendable a pair of half covers mutually separatable by a dividing surface endlessly continuous and mutually coupling both of the half covers by a hinge for integrally coupling the half covers, and on the dividing surface between both of the half covers, formed are a first insertion hole for inserting a coupler portion provided in the fuel injection valve therethrough, a second insertion hole for inserting the rear end portion of the fuel supply pipe therethrough, and a third insertion hole for inserting the return-side connection pipe portion therethrough. With such configuration, the whole of the sound insulation cover is integrally formed, and thus only one metal mold is sufficient for molding the sound insulation cover, bringing an advantage in terms of cost. In addition, the first, second and third insertion holes for inserting therethrough the coupler portion of the fuel injection valve, the rear end portion of the fuel supply pipe, and the return-side connection pipe portion, respectively, are formed on the dividing surface between both of the half covers. Accordingly, installation easiness when covering the fuel supply pipe, the fuel injection valve and the pressure regulator with the sound insulation cover is improved.

### BRIEF DESCRIPTION OF THE DRAWINGS

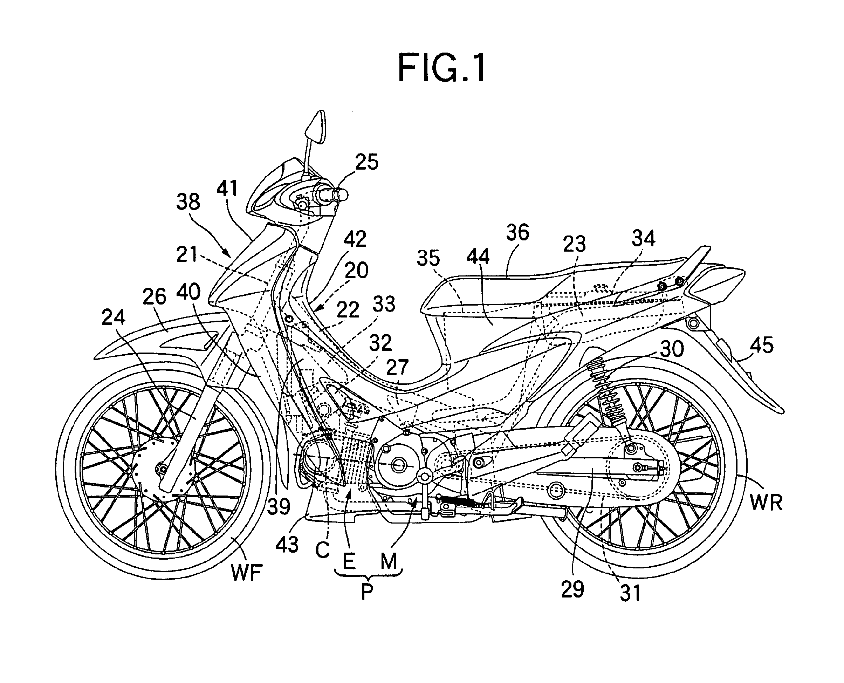

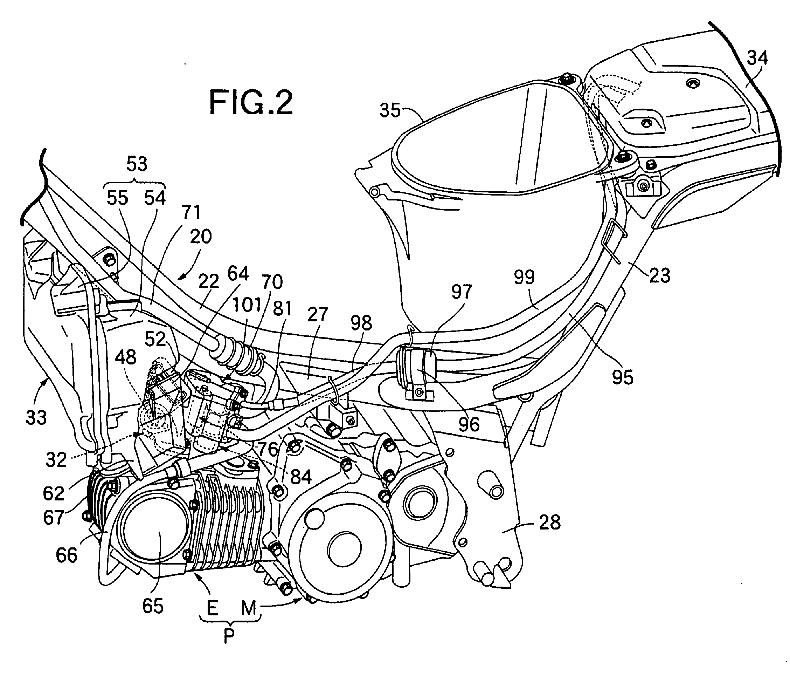

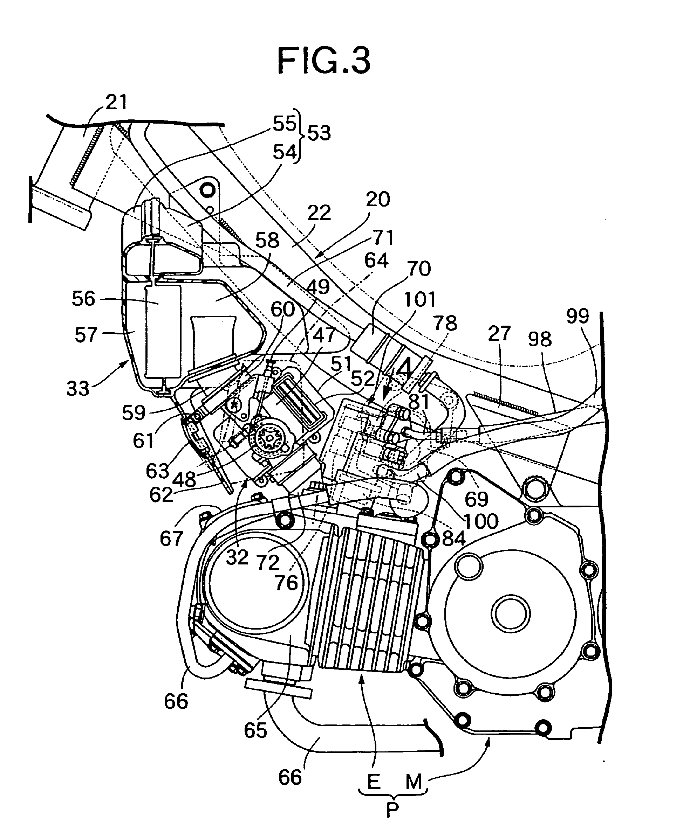

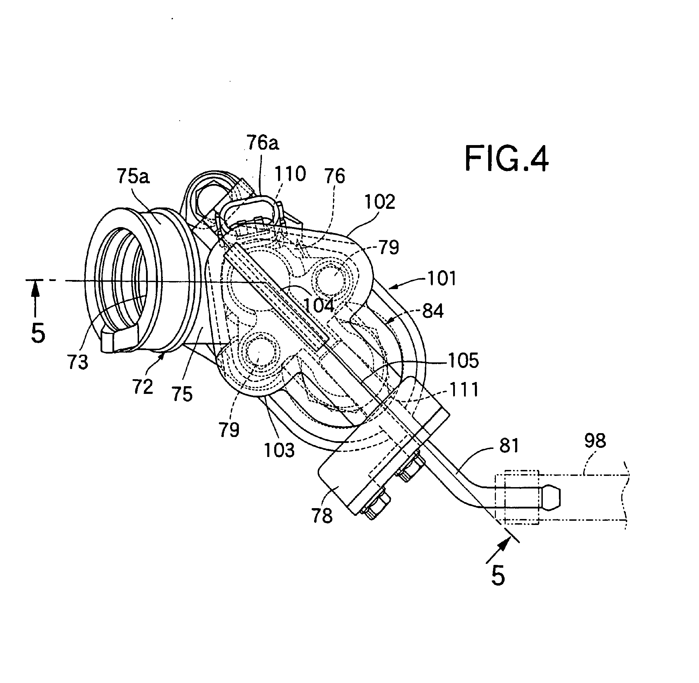

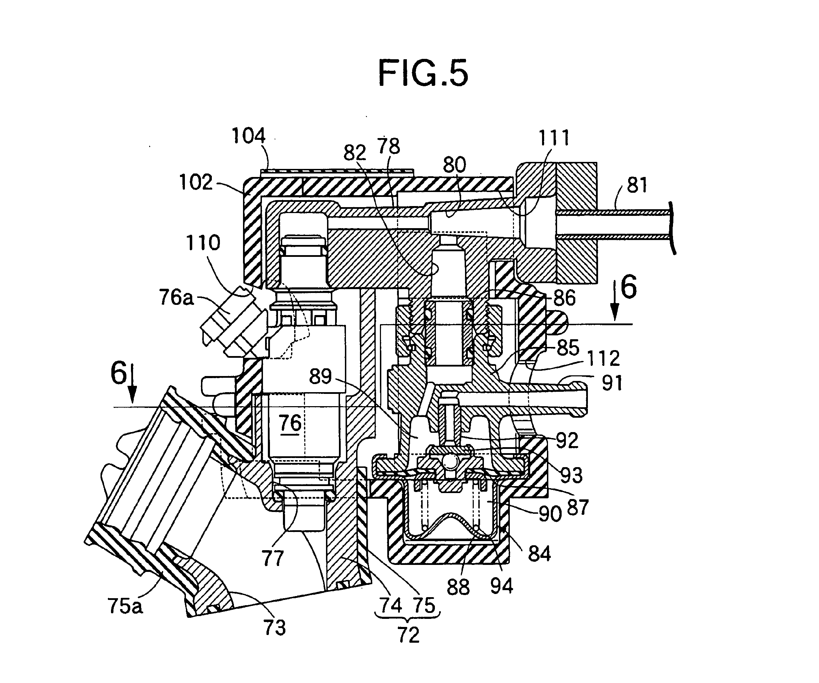

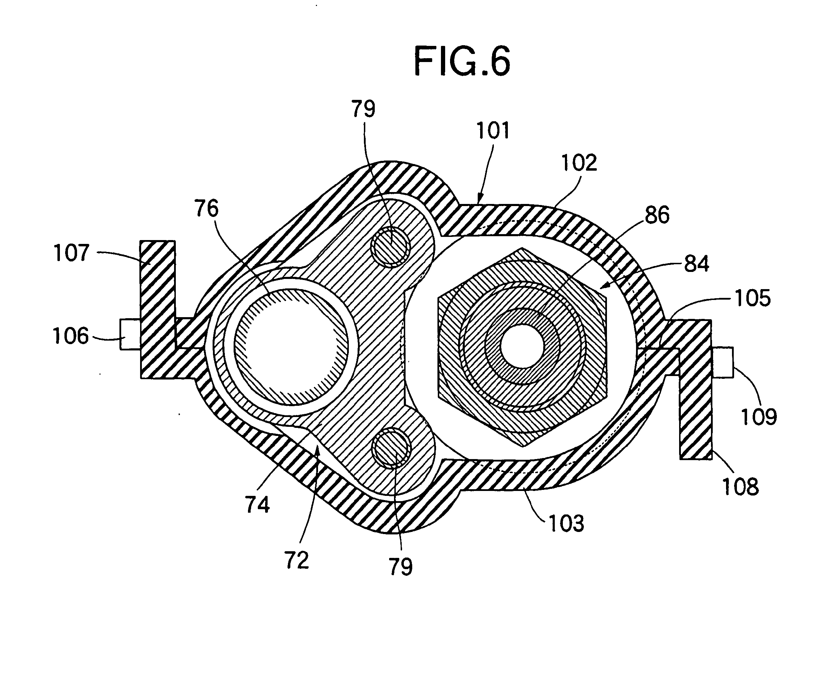

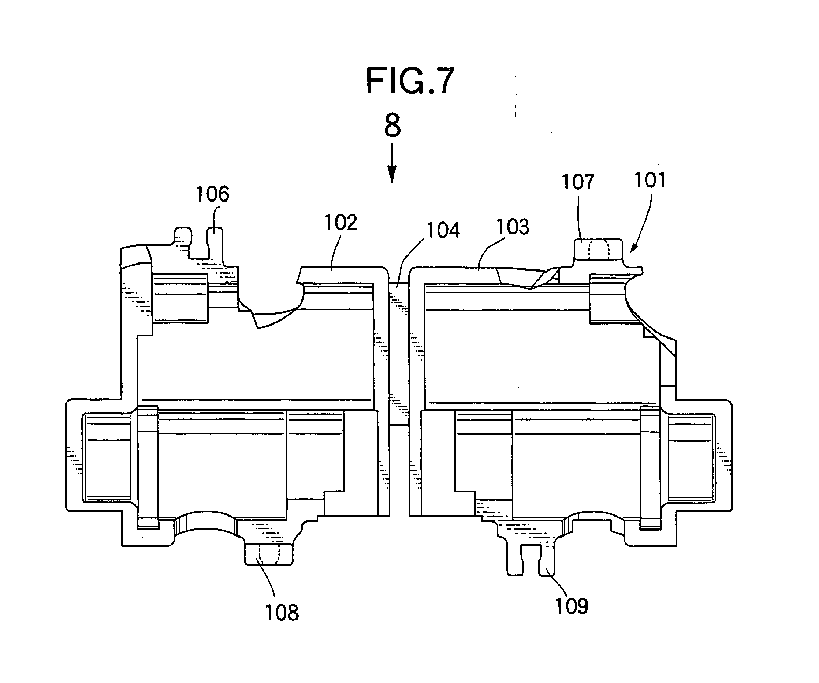

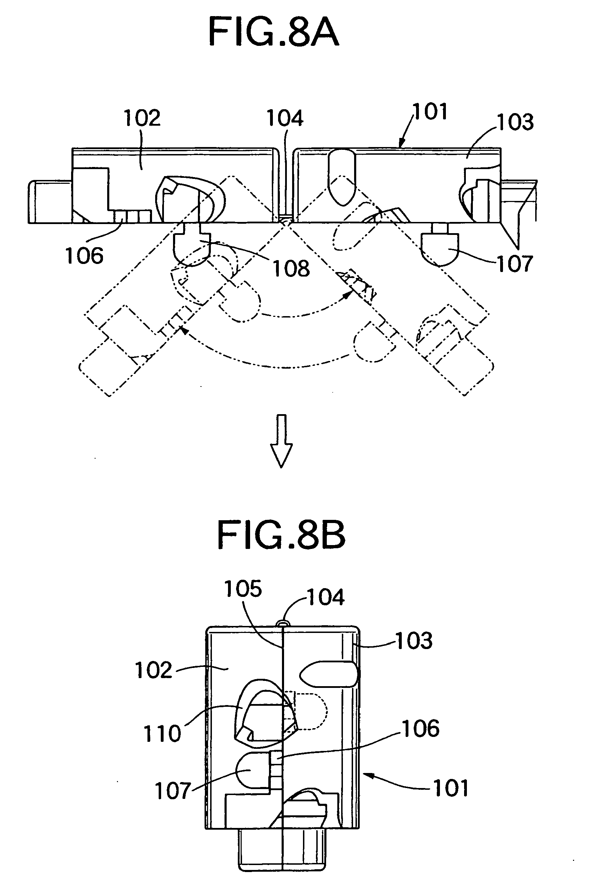

Figs. 1 to 8B are views showing one embodiment of the present invention; Fig.1 is an overall side view of a motorcycle; Fig. 2 is a perspective view of a center portion in a fore-and-aft direction of the motorcycle in a state where a body cover is detached; Fig.3 is a side view of an engine and an air intake system; Fig. 4 is an enlarged view on an arrow 4 of Fig. 3; Fig. 5 is a cross-sectional view along line 5-5 of Fig.4; Fig.6 is a cross-sectional view along line 6-6 of Fig.5; Fig.7 is a front view of a cover in an open state; and Fig.8A and Fig.8B are views where a state when the cover is closed is seen from the direction of an arrow 8 of Fig.7.

### BEST MODE FOR CARRYING OUT THE INVENTION

A mode for carrying out the present invention will be described below based on one embodiment of the present invention, which is shown in the accompanying drawings.

First, in Fig. 1, a body frame 20 of this motorcycle includes a head pipe 21 supporting a front fork 24 so as to be steerable, a main frame 22 extended rearward and downward from the head pipe 21, and a right-and-left pair of rear frames 23 provided continuously to a rear portion of the main frame 22 and extended rearward and upward. A front wheel WF is axially supported on lower ends of the front fork 24, a bar-shaped steering handle 25 is coupled to an upper portion of the front fork 24, and a front fender 26 covering an upper portion of the front wheel WF is supported by the front fork 24.

Referring also to Fig. 2 and Fig. 3, the main frame 22 is one made of a square pipe of which lateral cross section is quadrangular, hanger plates 27 are fixedly attached to both side faces of an intermediate portion of this main frame 22, respectively, and pivot plates 28 are fixedly attached to both side faces of the rear portion of the main frame 22.

Below the main frame 22, an engine E in which a cylinder axis C is horizontalized or a front thereof is tilted upward, in this embodiment, an engine E in which the front of the cylinder axis C is tilted slightly upward is arranged. The engine E is suspended from the body frame 20 so as to be supported by the hanger plates 27 and the pivot plates 28.

A front end portion of a rear fork 29 is supported by the pivot plates 28 such that the rear fork 29 is vertically swingable, and a rear wheel WR is axially supported on rear ends of the rear fork 29. Moreover, rear cushions 30 are provided between the rear frames 23 in the body frame 20 and the rear fork 29.

The engine E is one configuring a power unit P together with a transmission M, and an output of the transmission M is transmitted to the rear wheel WR through a chain 31.

Moreover, above the engine E, a throttle body 32 and an air cleaner 33 in front of the throttle body 32 are arranged. Above the rear wheel WR, a fuel tank 34 is arranged. Upper portions of a storage box 35 arranged in front of the fuel tank 34 and of the fuel tank 34 are covered with a passenger seat 36 of, for example, a tandem type so as to be openable.

To the body frame 20, a body cover 38 made of synthetic resin, which covers the body frame 20, a part of the engine E, the throttle body 32, the air cleaner 33, the fuel tank 34 and the storage box 35, is attached. The body cover 38 is configured of front side covers 39 arranged on both of right and left sides of the main frame 22, leg shields 40 continuous to front portions of both of the front side covers 39 so as to cover leg portions of a rider from front, a front top cover 41 continuous to both of the leg shields 40 so as to cover the head pipe 21 from front, a main frame top cover 42 continuous to the front top cover 41 so as to cover the head pipe 21 from a rear side and to cover the main frame 22 from above, an under cover 43 continuous to lower portions of both of the front side covers 39, and rear side covers 44 covering the fuel tank 34 and the storage box 35 from both sides.

The passenger seat 36 is arranged on upper portions of the rear side covers 44 while being set openable so as to make it possible to store and take out an article into and from the storage box 35 and to refuel the fuel tank 34. A rear fender 45 covering an upper rear portion of the rear wheel WR is provided continuously to the rear side covers 44.

The throttle body 32 is one configured in such a manner that a butterfly throttle valve (not shown) for adjusting an air content supplied to the engine E is rotatably supported in a body 47 and that a throttle wire 49 is wound around and coupled to a throttle drum 48 continuous to the throttle valve and arranged on a side of the body 47.

A housing 51 for housing a control unit (not shown) is attached to a side face of the body 47, which is opposite with the throttle drum 48. An upper portion of the housing 51 is extended to the throttle drum 48 side across an upper portion of the body 47, and a coupler 52 opening to the same side as that of the throttle drum 48 is formed integrally with the housing 51.

Paying attention to Fig. 3, a cleaner case 53 made of synthetic resin and provided in the air cleaner 33 is formed in such a manner that a cup-shaped main case body 54 supported on the main frame 22 and an open cup-shaped cover 55 opposite to the main case body 54 sandwich a filter unit 56 between peripheral portions thereof and are mutually coupled. An inside of the cleaner case 53 is partitioned into an uncleaned air chamber 57 on the cover 55 side and a cleaned air chamber 58 on the main case body 54 side.

To the main case body 54 of the cleaner case 53 , a connecting tube 59 for guiding cleaned air from the air cleaner 33 to the throttle body 32 is fixedly connected such that an upstream end thereof is plunged into the cleaned air chamber 58. A downstream end portion of the connecting tube 59 is connected to an upstream-side connection portion in the body 47 of the throttle body 32. A fixing band 60 for fixedly maintaining a connection state of the connecting tube 59 to the throttle body 32 is wound around the downstream end portion of the connecting tube 59. The fixing band 60 is tightened by a screw member 61, and thus the connection state of the connecting tube 59 to the throttle body 32 is fixedly maintained.

Under the main case body 54 in the cleaner case 53 of the air cleaner 33, a shield plate 62 covering, from front, at least the throttle drum 48 in the throttle body 32 arranged slantwise and rearward below the air cleaner 33 is provided by integral molding. The coupler 52 provided in the housing 51 in the throttle body 32 is also arranged on the throttle drum 48 side, and accordingly, the coupler 52 is also covered with the shield plate 62 from front. Hence, by the shield plate 62 provided integrally with the main case body 54, water and mud splashed by the front wheel WR can be prevented from being poured onto the throttle drum 48 while avoiding an increase of the number of parts. Moreover, the coupler 52 of the housing 51 is also covered from front with the shield plate 62, and accordingly, waterproof and mud-proof characteristics of the coupler 52 can also be enhanced.

An opening portion provided in the shield plate 62 at a position corresponding to the fixing band 60 is closed by a cap 63 so as to be openable. By opening the cap 63, a finger can be inserted from front to hold the fixing band 60 though the shield plate 62 is present, and it is made possible to easily perform tightening and loosening operations of the fixing band 60 from a side of the shield plate 62. Thus, workability at maintenance and assembly can be improved.

Moreover, a throttle drum guard 64 made of synthetic resin, which covers the throttle drum 48 of the throttle body 32 from the left side, is attached to the air cleaner 33, and it is made possible to prevent water and mud from being poured onto the throttle drum 48 from the side of the throttle body 32.

Moreover, to a lower portion of a cylinder head 65 in the engine E, an exhaust pipe 66 continuous to an exhaust port (not shown) of the cylinder head 65 is connected. A downstream end of a line 67 for supplying fresh secondary air into exhaust gas flowing from the exhaust port to the exhaust pipe 66 is connected to a head cover 68. An upstream end of the line 66 is connected to a secondary air control valve 69 supported by the engine E. Moreover, the secondary air control valve 69 is connected to a filter 70 supported by the main frame 22.

To the filter 70, a downstream end of an air supply tube 71 extended forward from the filter 70 along the main frame 22 is connected. An upstream end of the air supply tube 71 is extended above the air cleaner 33 and opened to the atmosphere in an inside of the body cover 38.

A downstream-side connection portion of the body 47 in the throttle body 32 is connected to an upstream end of an air intake pipe 72 of which downstream end is connected to an upper sidewall of the cylinder head 67 in the engine E.

In Fig. 4 and Fig. 5, the air intake pipe 72 is formed to be bent into a substantially C shape so as to connect the throttle body 32 and the cylinder head 65 arranged slantwise and rearward below the throttle body 32 to each other. This air intake pipe 72 is one made of a pipe body 74 forming an air intake path 73 and of a rubber-made coating material 75 covering a surface of the pipe body 74. A downstream-side connection portion of the throttle body 32 is tightly engaged with a connection cylinder portion 75a provided integrally with the coating material 75. Thus, the throttle body 32 is connected to the air intake pipe 72.

A fuel injection valve 76 for injecting fuel into the cylinder head 65 is attached to the air intake pipe 72, and opening/closing operations of the fuel injection valve 76 are controlled by the control unit housed in and fixed to the housing 51 attached to the body 47 of the throttle body 32.

An attachment hole 77 open toward the cylinder head 65 side is provided in the air intake pipe 72, and a tip end portion of the fuel injection valve 76 is hermetically engaged with the attachment hole 77 such that the tip end faces the air intake path 73 in the air intake pipe 72. Moreover, a rear end portion of the fuel injection valve 76 is engaged with a front end portion of a fuel supply pipe 78 arranged so as to be extended along the fore-and-aft direction below the main frame 22 in the body frame 20 and fastened to the air intake pipe 72 by bolts 79 and 79, and thus is hermetically connected to the front end portion of the fuel supply pipe 78 . Specifically, the fuel injection valve 76 is attached to the air intake pipe 72 so as to be sandwiched between the air intake pipe 72 and the fuel supply pipe 78.

In the fuel supply pipe 78, a fuel path 80 is provided such that a downstream end thereof is made to communicate with an inside of the rear end portion of the fuel injection valve 76, and an inlet-side connection pipe 81 communicating with an upstream end of this fuel path 80 is flange-coupled to a rear end portion of the fuel supply pipe 78.

In the fuel supply pipe 78 , a return path 82 branched from some point of the fuel path 80 is provided, and to the return path 82, a pressure regulator 84 arranged below the fuel supply pipe 78 is connected.

A valve housing 85 provided in this pressure regulator 84 is one arranged parallel to the fuel injection valve 76 at a position adjacent to the fuel injection valve 76, and an upper end portion of the valve housing 85 is attached to the fuel supply pipe 78 with a connection pipe 86 hermetically communicating with the return path 82 being interposed between the valve housing 85 and the fuel supply pipe 78. Specifically, the pressure regulator 84 is arranged so as not to protrude sideways from the fuel supply pipe 78 but to be extended downward from the point of the fuel supply pipe 78.

Moreover, a cover 88 is coupled to a lower portion of the valve housing 85 so as to sandwich a peripheral portion of a diaphragm 87 between the cover 88 and the valve housing 85. Between the valve housing 85 and the diaphragm 87 , a valve chamber 89 communicating with the return path 82 is formed. Between the diaphragm 87 and the cover 88, a spring chamber 90 is formed.

Moreover, in the valve housing 85, a return-side connection pipe portion 91 is provided integrally therewith, which is extended to the same side as that of the inlet-side connection pipe 81 flange-coupled to the fuel supply pipe 78 below the inlet-side connection pipe 81. A cylindrical valve seat member 92 communicating with the return-side connection pipe portion 91 is engaged with and fixedly attached to the valve housing 85 so as to face a center portion of the valve chamber 89 and protrude a part thereof to the diaphragm 87 side. Thus, in a center portion of the diaphragm 87, a valve body 93 capable of being seated on an end portion on the valve chamber 89 side of the valve seat member 92 is held so as to be capable of swinging to some extent. In the spring chamber 90, springs 94 contracted between the cover 88 and the diaphragm 87 are housed so as to exert spring force to warp the diaphragm 87 to the valve chamber 89 side.

In the pressure regulator 84 as described above, when liquid pressure on the valve chamber 89 side, which energizes the diaphragm 87 to the spring chamber 90 side, exceeds the spring force on the spring chamber 90 side, which energizes the diaphragm 87 to the valve chamber 89 side, the diaphragm 87 is warped to the spring chamber 90 side, the valve body 93 is separated from the valve seat member 92, and an adjustment is made such that liquid pressure of the fuel path 80 communicating with the valve chamber 89 through the return path 82, that is, fuel supply pressure to the fuel injection valve 76 does not reach a set pressure or more.

Moreover, as described above, the pressure regulator 84 is arranged at the position adjacent to the fuel injection valve 76. Accordingly, length of the fuel path 80 connecting the fuel injection valve 76 and the pressure regulator 84 can be shortened, and temperature of the fuel flowing through the fuel path 80 can be prevented from reaching high temperature.

An unillustrated fuel pump is incorporated in the fuel tank 34. A downstream end of a fuel supply-side line 95 that is a fuel hose for guiding fuel discharged from the fuel pump is connected to a high-pressure filter 97 supported by a support member 96 on a front portion of one of the rear frames 23 on the front left side of the storage box 35. A fuel supply-side line 98 that is a fuel hose of which upstream end is connected to the high-pressure filter 97 is connected to the inlet-side connection pipe 81 of the fuel supply pipe 78 in order to supply the fuel to the fuel injection valve 76.

In addition, the return-side connection pipe portion 91 provided in the pressure regulator 84 is arranged so as to connect thereto a fuel return-side line 99 in the same direction as an extended direction of the fuel supply-side line 98 connected to the rear end portion of the fuel supply pipe 78. The fuel return-side line 99 is connected to the return-side connection pipe portion 91 through a return-side connection pipe 100. Thus, on the left side of the storage box 35, the fuel supply-side lines 95 and 98 and the fuel return-side line 98 become extended parallel in the fore-and-aft direction.

Referring also to Fig. 6 to Fig. 8B, at least a part of the fuel supply pipe 78 , that is, a major portion of the fuel supply pipe 78 except the rear end portion, the fuel injection valve 76 and the pressure regulator 84 in this embodiment are ones covered with a sound insulation cover 101 made of an elastic material such as synthetic resin. This sound insulation cover 101 is brought into intimate contact with an outer surface of the air intake pipe 72, that is, the coating material 75 in the periphery of the fuel injection valve 76.

The sound insulation cover 101 is one formed in such a manner that a pair of half covers 102 and 103 are set bendable and mutually coupled by a hinge 104 for integrally coupling both of the half covers 102 and 103.

For example, the half covers 102 and 103 are mutually separatable by a dividing surface 105 along a plane including an axis of the fuel injection valve 76 and an axis of the pressure regulator 84. The hinge 104 is arranged at the uppermost position in a state of covering the major portion of the fuel supply pipe 78 except the rear end portion, the fuel injection valve 76 and the pressure regulator 84.

Specifically, in the case of covering the major portion of the fuel supply pipe 78 except the rear end portion, the fuel injection valve 76 and the pressure regulator 84 with the sound insulation cover 101, first, as shown in Fig. 8A, the sound insulation cover 101 is arranged above the fuel supply pipe 78 such that the half covers 102 and 103 are arrayed horizontally while interposing the hinge 104 therebetween. Subsequently, the hinge 104 is being bent such that both of the half covers 102 and 103 become mutually opposite. Thus, as shown in Fig. 8B, both of the half covers 102 and 103 are brought into mutual contact on the dividing surface 105 and into a state of covering the major portion of the fuel supply pipe 78 except the rear end portion, the fuel injection valve 76 and the pressure regulator 84.

Then, on both ends in a circumferential direction of the half cover 102 that is one of the pair, an engaging portion 106 and an engaging hook 108 are provided integrally therewith. On both ends in the circumferential direction of the other half cover 103, an engaging hook 107 elastically engaged with the engaging portion 106 and an engaging portion 109 elastically engaging the engaging hook 108 therewith are provided. Elastic engagement of the engaging hooks 107 and 108 with the engaging portions 106 and 109 will maintain a form of the sound insulation cover 101 covering the major portion of the fuel supply pipe 78 except the rear end portion, the fuel injection valve 76 and the pressure regulator 84.

In addition, on the dividing surface 105 of the sound insulation cover 101 between both of the half covers 102 and 103, formed are a first insertion hole 110 for inserting a coupler portion 76a provided in the fuel injection valve 76 therethrough, a second insertion hole 111 for inserting the rear end portion of the fuel supply pipe 78 therethrough, and a third insertion hole 112 for inserting the return-side connection pipe portion 91 of the pressure regulator 84 therethrough.

Next, an operation of this embodiment will be described. To the upper sidewall of the cylinder head 65 provided in the engine E arranged below the main frame 22 provided in the body frame 20, a downstream end of the air intake pipe 72 arranged below the main frame 22 and attached with the fuel injection valve 76 is connected. The front end portion of the fuel supply pipe 78 arranged below the main frame 22 so as to be extended along the fore-and-aft direction is connected to the fuel injection valve 76 attached to the air intake pipe 72. In the pressure regulator 84 arranged below the fuel supply pipe 76 and connected to an intermediate portion of the fuel supply pipe 78, the return-side connection pipe portion 91 for connecting the fuel return-side line 99 in the same direction as the extended direction of the fuel supply-side line 98 connected to the rear end portion of the fuel supply pipe 78 is provided.

Hence, the pressure regulator 84 is arranged below the fuel supply pipe 78 arranged below the main frame 22 provided in the body frame, and the pressure regulator 84 does not interfere with the body frame 20. Accordingly, a space for installing the pressure regulator 84 can be secured easily while avoiding interference with the body frame 20. Moreover, the pressure regulator 84 is connected to the intermediate portion of the fuel supply pipe 78 extended to the fore-and-aft direction. Accordingly, the pressure regulator 84 does not protrude to any side in the width direction of the body frame 20.

In addition, the fuel supply-side line 98 connected to the fuel supply pipe 78 and the fuel return-side line 99 connected to the pressure regulator 84 can be extended to the same direction. Accordingly, it is made possible to cable the fuel supply-side line 98 and the fuel return-side line 99 collectively, and an improvement of installation easiness can be achieved.

Furthermore, it is possible to install the fuel injection valve 76 and the pressure regulator 84 to the fuel supply pipe 78 and to make these into a unit, and a reduction of an installation man-hour in an assembly line of the motorcycle can be achieved.

Incidentally, the fuel supply pipe 78, the fuel injection valve 76 and the pressure regulator 84 are covered with the sound insulation cover 101 made of the elastic material and brought into intimate contact with the air intake pipe 72 in the periphery of the fuel injection valve 76. Almost all of transmission regions of a sound generated in the fuel injection valve 76 are covered with the sound insulation cover 101, and thus an excellent sound insulation effect can be obtained.

Furthermore, the sound insulation cover 101 is formed by setting bendable the pair of half covers 102 and 103 mutually separatable by the dividing surface 105 endlessly continuous and mutually coupling both of the half covers 102 and 103 by the hinge 104 for integrally coupling the half covers 102 and 103. Accordingly, the whole of the sound insulation cover 101 is integrally formed, and thus only one metal mold is sufficient for molding the sound insulation cover 101, bringing an advantage in terms of cost.

In addition, on the dividing surface 105 of the sound insulation cover 101 between both of the half covers 102 and 103, formed are the first insertion hole 110 for inserting the coupler portion 76a provided in the fuel injection valve 76 therethrough, the second insertion hole 111 for inserting the rear end portion of the fuel supply pipe 78 therethrough, and the third insertion hole 112 for inserting the return-side connection pipe portion 91 of the pressure regulator 84 therethrough. Accordingly, the installation easiness when covering the fuel supply pipe 78, the fuel injection valve 76 and the pressure regulator 78 with the sound insulation cover 101 is improved.

Although the embodiment of the present invention has been described as above, the present invention is not limited to the above-described embodiment, and it is possible to perform a variety of design changes without departing from the present invention described in the scope of claims.

## Claims

1. A fuel supply device in a motorcycle in which an engine (E) in which a cylinder axis (C) is horizontalized or a front thereof is tilted upward is arranged below a body frame (20) and mounted on the body frame (20), a downstream end of an air intake pipe (72) arranged below the body frame (20) and attached with a fuel injection valve (76) is connected to an upper sidewall of a cylinder head (65) provided in the engine (E), a fuel supply-side line (98) for guiding fuel and a pressure regulator (84) arranged close to the fuel injection valve (76) are connected to a fuel supply pipe (78) connected to the fuel injection valve (76), and a fuel return-side line (99) is connected to the pressure regulator (84), **characterized in that** a front end portion of the fuel supply pipe (78) arranged to be extended to a fore-and-aft direction below the body frame (20) is connected to the fuel injection valve (76), and a return-side connection pipe portion (91) for connecting the fuel return-side line (99) thereto in a same direction as an extended direction of the fuel supply-side line (98) connected to a rear end portion of the fuel supply pipe (78) is provided in the pressure regulator (84) arranged below the fuel supply pipe (76) and connected to an intermediate portion of the fuel supply pipe (78).

2. The fuel supply device in a motorcycle according to claim 1, wherein the fuel supply pipe (78), the fuel injection valve (76) and the pressure regulator (84) are covered with a sound insulation cover (101) made of an elastic material and brought into intimate contact with the air intake pipe (72) in a periphery of the fuel injection valve (76).

3. The fuel supply device in a motorcycle according to claim 2, wherein the sound insulation cover (101) is formed by setting bendable a pair of half covers (102, 103) mutually separatable by a dividing surface (105) endlessly continuous and mutually coupling both of the half covers (102, 103) by a hinge 104 for integrally coupling the half covers (102, 103), and on the dividing surface (105) between both of the half covers (102, 103), formed are a first insertion hole (110) for inserting a coupler portion (76a) provided in the fuel injection valve (76) therethrough, a second insertion hole (111) for inserting the rear end portion of the fuel supply pipe (78) therethrough, and a third insertion hole (112) for inserting the return-side connection pipe portion (91) therethrough.

## Patentansprüche

1. Kraftstoffzuführvorrichtung in einem Motorrad, bei dem ein Motor (E) mit einer horizontal angeordneten oder an ihrer Front nach oben geneigten Zylinderachse (C) unter einem Rahmenkörper (20) angeordnet und an dem Rahmenkörper (20) montiert ist; bei dem ein stromabwärtiges Ende eines Luftansaugrohres (72), das unter dem Rahmenkörper (20) angeordnet und an welchem ein Kraftstoffeinspritzventil (76) angebracht ist, mit einer oberen Seitenwand eines in dem Motor (E) vorgesehenen Zylinderkopfs (65) verbunden ist; bei dem eine zuführungsseitige Kraftstoffleitung (98) zum Führen von Kraftstoff und ein nahe an dem Kraftstoffeinspritzventil (76) angeordneter Druckregler (84) mit einem Kraftstoffzuführrohr (78) verbunden sind, das mit dem Kraftstoffeinspritzventil (76) verbunden ist; und bei dem eine rückführungsseitige Kraftstoffleitung (99) mit dem Druckregler (84) verbunden ist, **dadurch gekennzeichnet, dass** ein vorderer Endbereich des Kraftstoffzuführrohres (78), das sich in einer Längsrichtung erstreckend unter dem Rahmenkörper (20) angeordnet ist, mit dem Kraftstoffeinspritzventil (76) verbunden ist und dass in dem Druckregler (84), der unter dem Kraftstoffzuführrohr (76) angeordnet und mit einem Zwischenbereich des Kraftstoffzuführrohres (78) verbunden ist, ein rückführungsseitiger Verbindungsrohrbereich (91) für die Verbindung der rückführungsseitigen Kraftstoffleitung (99) mit dem Verbindungsrohrbereich (91) in der gleichen Richtung wie eine Erstreckungsrichtung der zuführungsseitigen Kraftstoffleitung (98), die mit einem hinteren Endbereich des Kraftstoffzuführrohres (78) verbunden ist, vorgesehen ist.

2. Kraftstoffzuführvorrichtung in einem Motorrad gemäß Anspruch 1, wobei das Kraftstoffzuführrohr (78), das Kraftstoffeinspritzventil (76) und der Druckregler (84) mit einer Schallschutzverkleidung (101) versehen sind, die aus einem elastischen Material hergestellt ist und in einer Peripherie des Kraftstoffeinspritzventils (76) eng mit dem Luftansaugrohr (71) in Kontakt ist.

3. Kraftstoffzuführvorrichtung in einem Motorrad gemäß Anspruch 2,
wobei die Schallschutzverkleidung (101) gebildet ist durch eine biegbare Ausbildung eines Paares von Verkleidungshälften (102, 103), die durch eine Teilungsfläche (105) voneinander getrennt werden können, die die beiden Verkleidungshälften (102, 103) durch ein Scharnier (104) für den integralen Zusammenschluss der Verkleidungshälften (102, 103) endlos durchgehend miteinander verbindet, wobei an der Teilungsfläche (105) zwischen den beiden Verkleidungshälften (102, 103) eine erste Einführöffnung (110) zum Einführen eines in dem Kraftstoffeinspritzventil (76) vorgesehenen Verbindungsbereichs (76a) durch diese Öffnung, eine zweite Einführöffnung (111) zum Einführen des hinteren Endbereichs des Kraftstoffzuführrohres (78) durch diese Öffnung und eine dritte Einführöffnung (112) zum Einführen des rückführungsseitigen Verbindungsrohrbereichs (91) durch diese Öffnung gebildet sind.

## Revendications

1. Dispositif d'alimentation en carburant dans un motocycle dans lequel un moteur thermique (E), dans lequel un axe de cylindre (C) est placé horizontalement ou l'avant de celui-ci est incliné vers le haut, est agencé au-dessous d'un châssis de carrosserie (20) et monté sur le châssis de carrosserie (20), une extrémité avant d'un tube d'admission d'air (72), disposé au-dessous du châssis de carrosserie (20) et fixé avec un injecteur de carburant (76), est connectée à une paroi latérale supérieure d'une culasse (65) prévue dans le moteur thermique (E), une tuyauterie de côté d'alimentation en carburant (98) pour guider du carburant, et un régulateur de pression (84) disposé à proximité de l'injecteur de carburant (76), sont connectés à un tube d'alimentation en carburant (78) connecté à l'injecteur de carburant (76), et une tuyauterie de côté retour de carburant (99) est reliée au régulateur de pression (84), **caractérisé en ce qu'**une partie d'extrémité avant du tube d'alimentation en carburant (78), agencée pour être étendue en une direction avant et arrière au-dessous du châssis de carrosserie (20), est connectée à l'injecteur de carburant (76), et une partie de tube de connexion de côté retour (91), pour lui raccorder la tuyauterie de côté retour de carburant (99) dans la même direction que la direction de l'étendue de la tuyauterie de côté d'alimentation en carburant (98) connectée à une partie d'extrémité arrière du tube d'alimentation en carburant (78), est prévue dans le régulateur de pression (84), agencé au-dessous du tube d'alimentation en carburant (76) et connecté à une partie intermédiaire du tube d'alimentation en carburant (78).

2. Dispositif d'alimentation en carburant dans un motocycle selon la revendication 1, dans lequel le tube d'alimentation en carburant (78), l'injecteur de carburant (76) et le régulateur de pression (84) sont couverts par un capot d'isolation sonore (101), réalisé en un matériau élastique et mis en contact intime avec le tube d'admission d'air (72) dans une périphérie de l'injecteur de carburant (76).

3. Dispositif d'alimentation en carburant dans un motocycle selon la revendication 2, dans lequel le capot d'isolation sonore (101) est formé en rendant flexible une paire de demi-capots (102, 103), mutuellement séparables par une surface de division (105), continue et sans fin et en couplant mutuellement les deux demi-capots (102, 103) par une charnière 104 pour coupler solidairement les demi-capots (102, 103) et, sur la surface de division (105) entre les deux demi-capots (102, 103), sont formés un premier trou d'insertion (110), pour insérer à travers lui une partie de coupleur (76a) prévue dans l'injecteur de carburant (76), un deuxième trou d'insertion (111), pour insérer à travers lui la partie d'extrémité arrière du tube d'alimentation en carburant (78), et un troisième trou d'insertion (112), pour insérer à travers lui la partie de tube de connexion de côté retour (91).
